# EUROPEAN PATENT APPLICATION

(11) **EP 1 626 305 A2**
(43) Date of publication of application: **15.02.2006**
(21) Application number: 05106280.0
(22) Date of filing: 08.07.2005
(51) Int. Cl.: G02F 1/13357, H01J 65/04, H01J 61/30

(54) **Surface light source unit for a display device**

(30) Priority: 10.08.2004 KR 2004062768
(71) Applicant: SAMSUNG ELECTRONICS CO., LTD., Suwon-City, Kyungki-do (KR)
(72) Inventor: Park, Cheol-jin, 203-901, Woncheon Seongil Apt., Suwon-si, Gyeonggi-do (KR); Jang, Heong-yong,, Osan-si, Gyeonggi-do (KR)
(74) Representative: Geary, Stuart Lloyd

(57) **Abstract**

A surface light source unit (100) of a liquid crystal display device that is capable of preventing occurrence of a dark area caused by external electrode elements. The surface light source unit of a liquid crystal display unit comprises a surface light source body having a plurality of discharge sections which are divided into first regions (RE1) where the discharge sections are shaded by a support frame (320), and a second region (RE2) where the discharge sections are exposed without being shaded by the support frame, and first external electrode (130) elements provided on the surface light source body to correspond to the first regions that cover an area of the plurality of discharge sections that is smaller than the first regions. As a result, luminance of light projected from the surface light source unit can be uniformly controlled, and a display quality can be enhanced.

## Description

The present general inventive concept relates to a surface light source unit and a display device, such as a liquid crystal display device, having the same.

In general, a liquid crystal display (LCD) device can be defined as a flat display device for precisely controlling liquid crystal to display data processed in an information processing unit in the form of character, image, or moving picture.

In addition, the liquid crystal display device requires a separate light source unit because the liquid crystal display device is a non-self-emission device, which does not have a self-emission capability, unlike, say, a cathode ray tube (CRT), which is a self-emission display device.

The liquid crystal display device typically employs a light emitting diode (LED), which is a point light source, or a cold cathode fluorescent lamp (CCFL), which is a two-dimensional light source, as the light source unit. However, because LEDs and CCFLs do not have a uniform luminance, they require an optical element, such as a diffusion sheet and/or a prism sheet to make the luminance uniform.

Additionally, even when the optical element is used to make the luminance uniform, LEDs and CCFLs have a low efficiency in using light, because the optical element causes an optical loss. In addition, LEDs and CCFLs have a further drawback in that their manufacturing costs are high, because the they are of complicated constructions.

In an attempt to solve the problems described above, a surface light source unit that directly projects light from a surface has been used. The surface light source unit comprises a surface light source body that is divided into a plurality of discharge sections. External electrode elements are provided at top and bottom sides of, and on opposite ends of, the surface light source body to apply a discharge voltage to the plurality of discharge sections.

The surface light source unit produces a plasma discharge at the respective discharge sections as a result of the discharge voltage externally applied using the external electrode elements. This plasma discharge causes light rays having a wavelength outside the visible waveband to be generated. The light rays are converted into rays at a visible wavelength through interaction with a fluorescent material coated on inner walls of the surface light source unit.

However, the surface light source unit configured as described above is disadvantageous in that the opposite ends of the surface light source body, which are light emitting areas, are obscured by the external electrode elements. Accordingly, the light projected from the surface light source body is blocked by the external electrode elements, and thus dark areas having a lower luminance than that of an effective light emitting area are produced along edges of the surface light source unit. Additionally, there is a problem in that luminance distribution is not uniform due to the dark areas, and, as a result, the display quality of the LCD device deteriorates.

Accordingly, the present invention aims to provide a surface light source unit for a liquid crystal display device in which occurrence of dark areas caused by external electrode elements can be prevented.

According to a first aspect of the invention, a display device comprises a display panel, a light source unit arranged to illuminate the display panel, the light source unit comprising a light source body and a plurality of electrode elements overlying at least one portion of the light source body and a frame arranged to overlie said plurality of electrode elements, wherein said frame overlies a region of the light source body exceeding said at least one portion.

According to a second aspect of the invention, a light source unit for a liquid crystal display unit comprises a surface light source body having a plurality of discharge sections which are divided into first regions, where the plurality of discharge sections are overlapped by a support frame, and a second region where the plurality of discharge sections are exposed without being overlapped by the support frame, and first external electrode elements provided on the surface light source body to correspond to the first regions, that cover an area of the plurality of discharge sections that is smaller than the first regions.

Additional aspects and advantages of the present invention will be set forth in part in the description which follows and, in part, will be obvious from the description, or may be learned by practice of the general inventive concept.

The first external electrode elements may extend over a predetermined area from opposite ends of the plurality of discharge sections toward corresponding boundaries between the first and second regions.

The first external electrode elements may have spacing borders spaced from the boundaries between the first and second regions to outer edges of the first region, respectively.

In addition, each spacing border may be symmetrically formed with respect to a central axis of each of the plurality of discharge sections. The first external electrode elements may also be formed so that non-electrode portions, which are not overlapped by the first external electrode elements, are provided in the first regions and each non-electrode portion gradually extends toward the boundaries between the first and second regions.

The first external electrode elements may comprise a plurality of main electrode parts, which are formed to have a non-flat shape and are equi-spaced from one another so that the plurality of main electrode parts correspond to the plurality of discharge sections respectively, and a plurality of sub-electrode parts, which are formed to have a flat shape to interconnect the respective main electrode parts.

The support frame may be a rectangular frame to cover and to support an outer border of the surface light source body and having an open window, where an inner periphery of the rectangular frame conforms to corresponding boundaries between the first and second regions.

The first external electrode elements may have a constant width that extends toward corresponding boundaries between the first and second regions.

The surface light source unit may further comprise second external electrode elements provided on the surface light source body to correspond to the first external electrode elements and on an opposite side of the surface light source body from the first external electrode elements, wherein the surface light source body is interposed between the first and second external electrode elements.

In addition, the second external electrode elements may have a width that extends beyond corresponding boundaries between the first and second regions and is larger than the first regions, and the width of the second external electrode elements may be constant.

According to a third aspect of the invention, a liquid crystal display device comprises a support case having a support frame with a window, a liquid crystal display panel installed in the support case to display images using incident light and a surface light source unit to project light to the liquid crystal display panel. The surface light source unit may comprise: a surface light source body having a plurality of discharge sections which are divided into first regions where the plurality of discharge sections are shaded by the support frame, and a second region where the plurality of discharge sections are exposed without being shaded by the support frame, and first external electrode elements provided on the surface light source body to correspond to the first regions. The first external electrode elements may be provided on the surface light source body to cover an area of the plurality of discharge sections that is smaller than the first regions.

Embodiments of the invention will now be described, by way of example, with reference to the accompanying drawings of which:
Figure 1 is an exploded perspective view illustrating a liquid crystal display device according to an embodiment of the present general inventive concept;
Figure 2 is a perspective view illustrating a surface light source unit of Figure 1;
Figure 3 is a perspective view illustrating a rear side of the surface light source unit of Figure 2;
Figure 4 is a cross-sectional view taken along line IV-IV of Figure 2;
Figure 5 is a top plan view illustrating a main part of the surface light source unit extracted from Figure 2; and
Figure 6 is a schematic top plan view illustrating a surface light source unit according to another embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

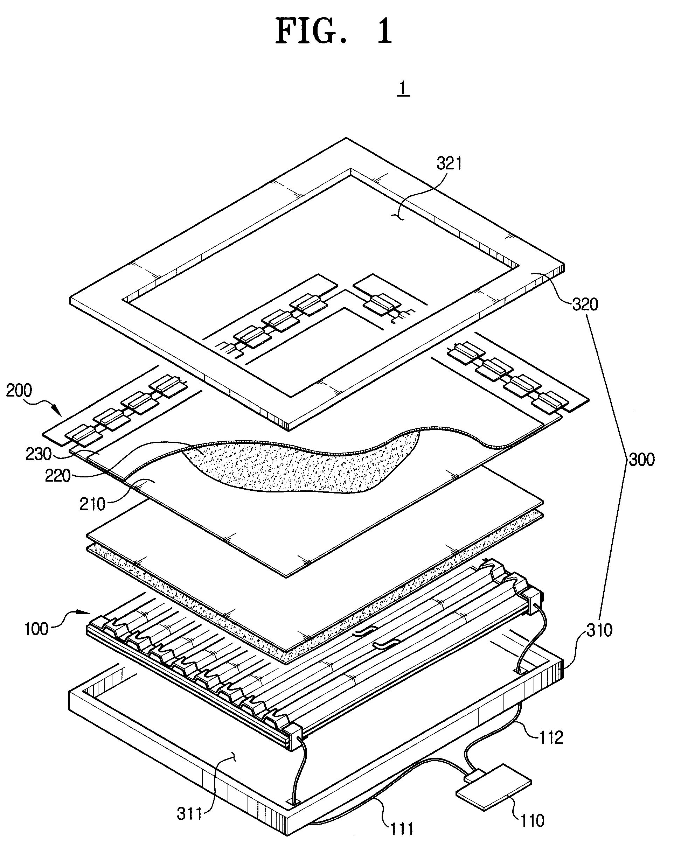

Referring to Figure 1, the liquid crystal display device 1 comprises the surface light source unit 100, a light crystal display panel 200, and a support case 300.

The support case 300 includes a case body 310, on which the surface light source unit 100 and the liquid crystal panel 200 are laminated and received, and a support frame 320 located at an upper portion of the case body 310 to cover outer borders of the surface light source unit 100 and the liquid crystal display panel 200. The support frame 320 may be configured as a rectangle having a window 321 therein.

The surface light source unit 100 is received in a reception area 311 of the case body 310. Technical features of the surface light source unit 100 are described in detail below with reference to other drawings.

The liquid crystal display panel 200 comprises a thin film transistor (TFT) substrate 210, a color filter substrate 230, and a liquid crystal material 220 interposed between the TFT substrate 210 and the color filter substrate 230. The liquid crystal material 220 converts the light generated from the surface light source unit 100 into image light including information.

Because the liquid crystal display panel 200 is sensitive to external impact, four edges of the liquid crystal display panel 200 are covered and protected by the support frame 320 so that the liquid crystal panel 200 is contained within the support frame 320.

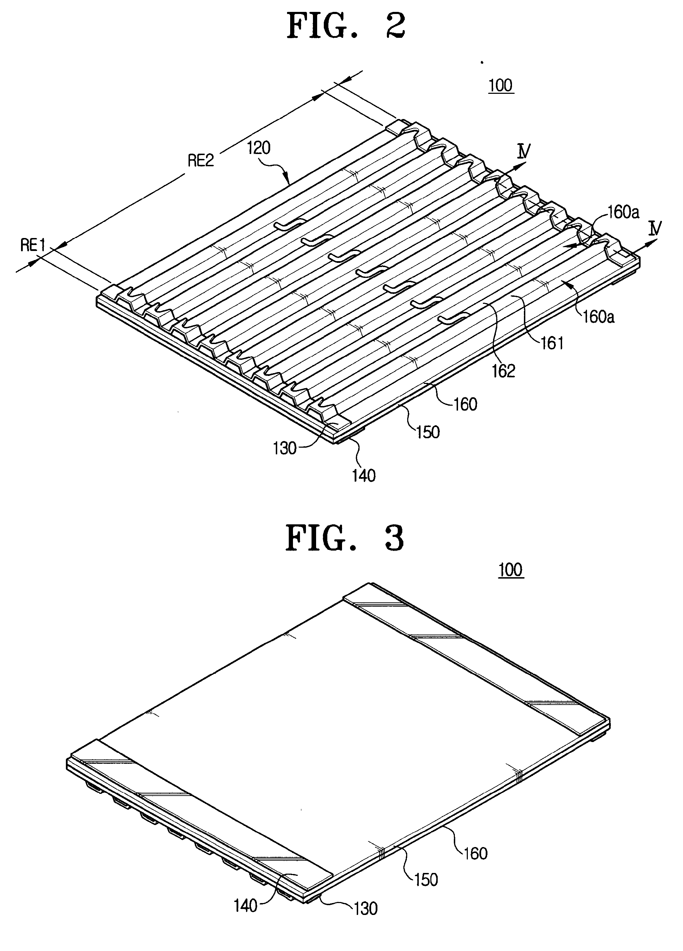

Referring to Figures 2 and 3, the surface light source unit 100 comprises a surface light source body 120 and first and second external electrode elements 130 and 140 disposed on opposite sides of the surface light source body 120 and each provided at opposite ends of the surface light source body 120.

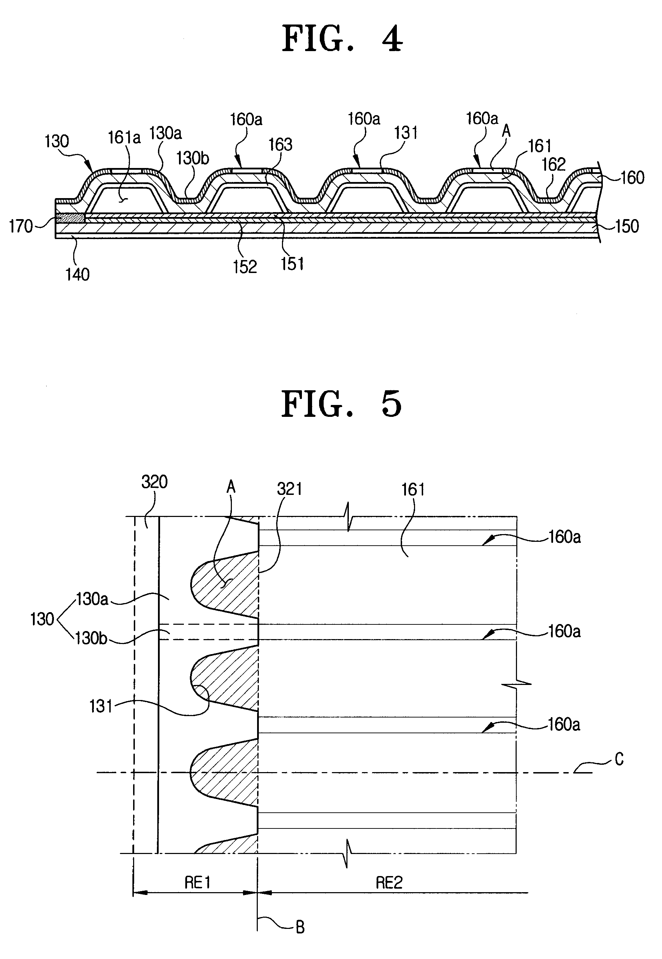

The surface light source body 120 comprises a first substrate 150 and a second substrate 160. As illustrated in Figures 2 and 4, the second substrate 160 is laminated above the first substrate 150.

The first substrate 150 is shaped as a flat plate and formed from a transparent substrate (e.g., a glass substrate) that transmits visible light but blocks ultraviolet light. Referring to Figure 4, a first fluorescent layer 151 and a reflective layer 152 are laminated between the first and second substrates 150 and 160.

Referring to Figures 2 and 4, the second substrate 160 is shaped as a non-flat plate and comprises a plurality of discharge space sections 161 spaced from the first substrate 150 to form profiles of a plurality of discharge sections 160a, and a plurality of space dividing sections 162. The discharge space sections 161 are shaped as a non-flat plate. As illustrated in Figure 4, a cross-section of the second substrate160 extending in a direction perpendicular to the discharge space sections 161 has a shape in which a plurality of semi-oval parts, each similar to a trapezoid shape, are continuously connected to each other. However, the discharge space sections 161 of the second substrate 160 may be formed to have other various cross-sectional shapes (e.g., continuously connected semi-circle-shaped or rectangular parts).

As illustrated in Figure 4, a second fluorescent layer 163 is formed to have a predetermined thickness within each of the discharge space sections 161. Therefore, the discharge sections 160a comprise discharge spaces 161a each defined by the first and second fluorescent layers 151 and 163, which are arranged to face one another, and the respective discharge space sections 161. The space dividing sections 162 are respectively formed between every two adjacent discharge space sections 161, thereby separating the discharge spaces 161a from each other and also the discharge sections 160a from each other. The space dividing sections 162 are laminated to contact the first fluorescent layer 151. In other words, portions of the second substrate 160 that correspond to the space dividing sections 162 are laminated to the first fluorescent layer 151. The second substrate 160 may be formed from a transparent substrate similar to that of the first substrate 150.

For example, the second substrate 160 may be attached to the first substrate 150 by interposing an adhesive element 170 between the first and second substrates 150 and 160 in such a manner that the adhesive element 170 extends along edges of the first and second substrates 150 and 160. The adhesive element 170 may comprise frit, which is a composition of glass that metal and has a melting point that is lower than that of glass, and may be fired (or applied) onto the first and second substrates 150 and 160. The adhesive element 170 may only be provided at the edges between the substrates 150 and 160 and may not be provided between discharge space sections 161 in contact with the first substrate 150.

The space dividing sections 162 are closely contacted and joined with the first fluorescent layer 151. After closely contacting the first and second substrates 150 and 160, the discharge spaces 161a are evacuated so that the discharge spaces 161a are in a vacuum state. Discharge gas, which can produce a plasma discharge, is then introduced into the discharge spaces 161a. The pressure of the discharge gas is lower than the external atmospheric pressure so that the space dividing sections 162 can maintain close contact with the first substrate 150.

During operation, the first and second fluorescent layers 151 and 163 emit visible rays under the influence of ultraviolet rays produced in the discharge spaces 161a as a result of the plasma discharge. The reflective layer 152 reflects the visible rays produced by the first and second fluorescent layers 151 and 163 toward the second substrate 160, thus preventing leakage of the visible rays toward the first substrate 150.

As illustrated in Figures 1, 2 and 5, the discharge sections 160a of the surface light source body 120 may be divided into first regions RE1 where the discharge sections 160a are shaded by the support frame 320 without being exposed, and a second region RE2 that corresponds to the window 321 of the support frame 320 and where the discharge sections 160a are not shaded by the support frame 320. In other words, each of the opposite ends of the surface light source body 120 includes a plurality of first regions RE1 that meet the second region RE2 at a corresponding boundary B. Each of the discharge sections 160a may correspond to two first regions RE1, which are disposed at the opposite ends of the surface light source body 120, and the second region RE2 between the two first regions RE1. The second region RE2 is an effective light emitting region that emits visible rays produced as a result of the plasma discharge within the discharge sections 160a of the surface light source body 120.

As illustrated in. Figure 2, the first external electrode elements 130 are formed to cover top surfaces of the second substrate 160 disposed opposite to each other with respect to the first regions RE1. The first external electrode elements 130 correspond to the first regions RE1 and extend over the plurality of discharge sections 160a.

More specifically, the first external electrode elements 130 are formed to cover the second substrate 160, and in particular, the discharge sections 160a with an area smaller than the first regions RE1. The first external electrode elements 130 extend from the opposite ends of the surface light source body 120 over a predetermined area of the discharge sections 160a toward the boundaries B (see Figure 5) between the first and second regions RE1 and RE2.

As illustrated in Figure 5, the first external electrode elements 130 have spacing borders 131 spaced from the boundaries B and extend from outer edges of the first regions RE1 by a predetermined distance. Due to these spacing boarders 131, the first regions RE1 are formed with non-electrode portions A which are not overlapped by the first external electrode elements 130. The non-electrode portions A are indicated in FIG. 5 by a partially shaded area. Therefore, the non-electrode portions A are formed as a predetermined plane extending from the boundaries B to the spacing borders 131. Each spacing border 131 may be formed to be symmetric with reference to an imaginary central axis C, which runs parallel to a longitudinal direction of the discharge sections 160a. The imaginary central axis C may be a central axis of the discharge sections 161a. Additionally, each non-electrode portion A may also be formed in a symmetric form with reference to the imaginary axis C. Since the non-electrode portions A are provided within the first regions RE1, it is possible to reduce the predetermined area of the discharge sections 160a that is shaded by the first external electrode elements 130, whereby it becomes possible to prevent the occurrence of dark areas caused by a decrease in luminance in the first regions RE1.

In addition, the first external electrode elements 130 include a plurality of main electrode parts 130a formed to have a non-flat shape and a plurality of sub-electrode parts 130b formed to have a flat plate shape to interconnect the main electrode parts 130a. As illustrated in Figures 2 and 4, the non-flat shape of the main electrode parts 130a and the flat plate shape of the sub-electrode parts 130b of the first external electrode elements 130 conform to a repeated shape including protrusions corresponding to the discharge sections 160a and recessions corresponding to the space dividing sections 162, respectively, of the second substrate 160. Further, the spacing borders 131 and hence the non-electrode portions A are defined by the main electrode parts 130a.

As illustrated in Figure 3, the second electrode elements 140 are provided on opposite ends of the surface light source body 120 to correspond with the first external electrode elements 130 on opposite sides of the surface light source body 120, respectively. The second external electrode elements 140 are formed to have a second predetermined area in the direction where the second external electrode elements 140 extend over the discharge sections 160a. The second external electrode elements 140 may have a constant width and may extend into a part of the second region RE2 and overlap completely with the first regions RE1. Thus, by increasing the second predetermined area and the second electrode elements 140 to include the predetermined area of the non-electrode portions A provided by the first external electrode elements 130, it becomes possible to prevent a decrease in stray capacitance between the first and second external electrode elements 130 and 140.

Referring to Figures 1 and 2, the first and second external electrode elements 130 and 140 configured as described above apply a discharge voltage to the first and second substrates 150 and 160, thereby producing a plasma discharge in the plurality of discharge sections 160a. That is, an inverter 110 illustrated in Figure 1 receives an externally applied alternating voltage, increases the externally applied alternating voltage, and outputs to the discharge voltage to drive the surface light source unit 100. The discharge voltage is applied to the first and second external electrode elements 130 and 140 through first and second power lines 111 and 112, respectively.

The first and second external electrode elements 130 and 140 may be formed by attaching conductive aluminum (Al) tape or gluing a conductive metallic material using a conductive adhesive such as silver (Ag) paste. Alternatively, it is also possible to form the first and second external electrode elements 130 and 140 by spray-coating metal powders formed from one or more materials selected from a group including cupper (Cu), nickel (Ni), silver (Ag), gold (Au), aluminum (Al), Chromium (Cr), or the like that are excellent in conductivity. The first external electrode elements 130 may be formed by positioning a mask that defines a region where the first external electrode elements 130 are to be formed, performing a spray-coat through the mask, and then removing the mask.

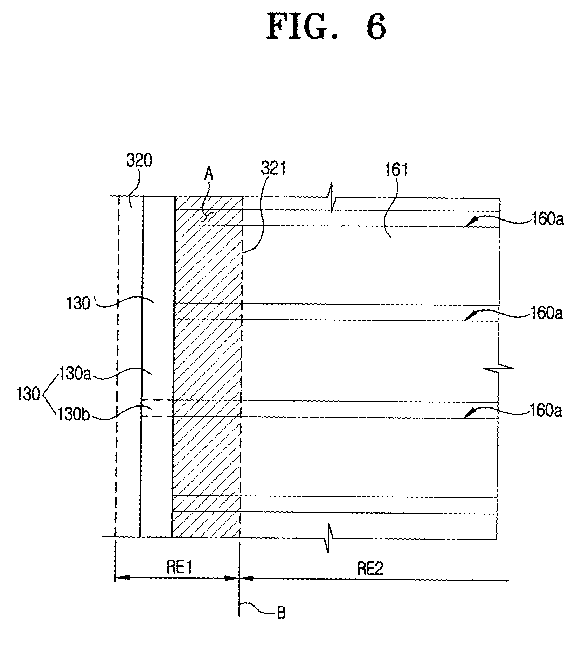

As illustrated in Figure 6, first external electrode elements 130' may be formed to have a constant width along a direction where the first external electrode elements 130' extend over the plurality of discharge sections 160a. The first external electrode elements 130' may be spaced from the boundaries B and may extend from the outside edges of the first regions RE1 by a predetermined distance.

As described above, by forming the first external electrodes 130 or 130' to have an area smaller than that of the first regions RE1, it becomes possible to increase an effective light emitting region by the area of the non-electrode portions A in the first regions RE1. Therefore, it is possible to minimize the dark areas produced in the boundaries B between the support frame 320 (see Figure 1) and the first regions RE1 even if the first regions RE1 are shaded by the support frame 320.

Although the non-electrode portions A illustrated in Figures 1, 2, and 5 are formed in semi-oval sections, it should be understood that this shape is merely exemplary. Other shapes may be used to form the non-electrode portions A of the present general inventive concept. That is, the non-electrode portions A can be implemented by various other geometric sections such as a triangular section, a rectangular section, and a semi-circular section.

As described above, it is possible to minimize dark areas which may be produced at marginal areas of a surface light source unit to increase an effective light emitting region by modifying a shape of the external electrode elements that shade opposite ends of the surface light source unit. Therefore, it is possible to uniformly control the luminance of light projected from the surface light source unit, thereby enhancing the display quality.

Although a few embodiments of the present invention have been shown and described, it will be appreciated by those skilled in the art that changes may be made in these embodiments without departing from the principles of the invention, the scope of which is defined in the appended claims and their equivalents.

## Claims

1. A display device (1), comprising:
a display panel (200); and
a light source unit (100) arranged to illuminate the display panel (200), comprising a light source body (120) and a plurality of electrode elements (130) overlying at least one portion (RE1) of the light source body (120);
**characterised by**:
a frame (320) arranged to overlie said plurality of electrode elements (130),
wherein said frame overlies a region of the light source body (120) exceeding said at least one portion (RE1).

2. A surface light source unit of a liquid crystal display unit having a support frame, comprising:
a surface light source body having a plurality of discharge sections which are divided into first regions where the plurality of discharge sections are shaded by a support frame, and a second region where the plurality of discharge sections are exposed without being shaded by the support frame; and
first external electrode elements provided on the surface light source body to correspond to the first regions that cover an area of the plurality of discharge sections that is smaller than the first regions.

3. The surface light source unit as claimed in claim 2, wherein the first external electrode elements extend over a predetermined area from opposite ends of the plurality of discharge sections toward corresponding boundaries between the first and second regions.

4. The surface light source unit as claimed in claim 3, wherein the first external electrode elements comprises spacing borders spaced from the boundaries between the first and second regions to outer edges of the first regions, respectively.

5. The surface light source unit as claimed in claim 4, wherein each spacing border is symmetrically formed with respect to a central axis of each of the plurality of discharge sections.

6. The surface light source unit as claimed in claim 4, wherein the first external electrode elements are formed so that non-electrode portions, which are not overlapped by the first external electrode elements, are provided in the first regions and each non-electrode portion gradually extends toward the boundaries between the first and second regions.

7. The surface light source unit as claimed in claim 6, wherein the first external electrode elements comprise a plurality of main electrode parts which are formed to have a non-flat shape and are equi-spaced from each other so that the plurality of main electrode parts correspond to the plurality of discharge sections, respectively, and a plurality of sub-electrode parts which are formed to have a flat shape to interconnect the respective main electrode parts.

8. The surface light source unit as claimed in claim 2, wherein the support frame comprises a rectangular frame to cover and to support an outer border of the surface light source body, an open window, and an inner periphery of the rectangular frame defined by the open window and conforms to corresponding boundaries between the first and second regions.

9. The surface light source unit as claimed in claim 2, wherein the first external electrode elements have a constant width that extends toward corresponding boundaries between the first and second regions.

10. The surface light source unit as claimed in claim 2, further comprising:
second external electrode elements provided on the surface light source body to correspond to the first external electrode elements and on an opposite side of the surface light source body from the first external electrode elements,
wherein the surface light source body is interposed between the first and second external electrode elements.

11. The surface light source unit as claimed in claim 10, wherein the second external electrode elements have a width that extends toward corresponding boundaries between the first and second regions and is larger than that of the first regions.

12. The surface light source unit as claimed in claim 11, wherein the second external electrode elements have a constant width.

13. The surface light source unit as claimed in claim 2, wherein the first external electrode elements form non-electrode regions in each of the plurality of discharge sections that are not overlapped by the first external electrode elements, and the non-electrode regions have one of a semi-circular shape, a semi-ovular shape, a rectangular shape, and a triangular shape.

14. The surface light source unit as claimed in claim 2, wherein the plurality of discharge sections are disposed among a plurality of space dividing sections, and the plurality of discharge sections and the plurality of space dividing sections form a plurality of protrusions and a plurality of recessions, respectively, on a surface of the surface light source body.

15. The surface light source unit as claimed in claim 14, wherein the first external electrode elements extend along opposite ends of the surface light source body to form a first shape that corresponds to the plurality of space dividing sections and a second shape that corresponds to the plurality of discharge sections, and the first external electrode elements each comprise a main electrode part having the second shape to conform to the protrusions and a sub-electrode part to connect the main electrode parts and having the first shape to conform to the recessions.

16. The surface light source unit as claimed in claim 2, wherein the plurality of discharge sections each comprise a discharge space having a discharge gas disposed therein to produce a plasma discharge, and the surface light source body comprises:
a first substrate having a flat shape to form a bottom surface of the surface light source body; and
a second substrate having a non-flat shape including a plurality of repeated protrusions to form the plurality of discharge sections when adhered to the first substrate.

17. A surface light source unit to be disposed in a window frame of a display device and to provide light to a display panel, comprising:
a surface light source body having a discharge area including a light emitting area that is unobstructed by the window frame and a non-light emitting area that corresponds to and is obstructed by the window frame; and
a first electrode element disposed on a first surface of the surface light source body to cover a first portion of the non-light emitting area so that a second portion of the non-light emitting area is not covered by the first electrode element.

18. The surface light source unit as claimed in claim 17, further comprising:
a second electrode element disposed on a second surface of the surface light source body to cover the first portion and the second portion of the non-light emitting area.

19. The surface light source unit as claimed in claim 18, wherein the first electrode
element does not have a rectangular shape, and the second electrode element has a rectangular shape.

20. A liquid crystal display device, comprising:
a support case having a support frame with a window;
a liquid crystal display panel installed in the support case to display images using incident light; and
a surface light source unit being received in the support case to project light to the liquid crystal display panel, and the surface light source unit comprising:
a surface light source body having a plurality of discharge sections which are divided into first regions where the plurality of discharge sections are shaded by the support frame, and a second region where the plurality of discharge sections are exposed without being shaded by the support frame, and
first external electrode elements provided on the surface light source body to correspond to the first regions that cover an area of the plurality of discharge sections with an area smaller than the first regions.

21. The liquid crystal display device as claimed in claim 20, wherein the first external electrode elements extend over a predetermined area from opposite ends of the plurality of discharge sections toward corresponding boundaries between the first and second regions.

22. The liquid crystal display device as claimed in claim 21, wherein the first external electrode elements comprise spacing borders spaced from the boundaries between the first and second regions to outer edges of the first regions, respectively.

23. The liquid crystal display device as claimed in claim 22, wherein each spacing border is symmetrically formed with respect to a central axis of each of the plurality of discharge sections.

24. The liquid crystal display device as claimed in claim 22, wherein the first external electrode elements are formed so that non-electrode portions, which are not overlapped by the first external electrode elements, are provided in the first regions and each non-electrode portion gradually extends toward the boundaries.

25. The liquid crystal display device as claimed in claim 22, wherein the first external electrode elements comprise a plurality of main electrode parts which are formed to have a non-flat shape and are equi-spaced from each other so that the plurality of main electrode parts correspond to the plurality of discharge sections, respectively, and a plurality of sub-electrode parts formed to have a flat shape to connect the respective main electrode parts with each other.

26. The liquid crystal display device as claimed in claim 20, wherein the support frame is a rectangular frame to cover and to support an outer border of the surface light source body, an open window, and an inner periphery of the rectangular frame defines the open window and conforms to corresponding boundaries between the first and second regions.

27. The liquid crystal display device as claimed in claim 20, wherein the first external electrode elements have a constant width that extends toward corresponding boundaries between the first and second regions.

28. The liquid crystal display device as claimed in claim 20, further comprising:
second external electrode elements provided on the surface light source body to correspond to the first external electrode elements and on an opposite side of the surface light source body from the first external electrode elements,
wherein the surface light source body is interposed between the first and second external electrode elements.

29. The liquid crystal display device as claimed in claim 28, wherein the second external electrode elements have a width that extends toward corresponding boundaries between the first and second regions and is larger than the first regions.

30. The liquid crystal display device as claimed in claim 29, wherein the second external electrode elements have a constant width.

31. A display device, comprising:
a support case having a window frame;
a display panel installed in the support case to display images using incident light; and
a surface light source unit being received in the support case to project light to the display panel, and the surface light source unit comprising:
a surface light source body having a discharge area including a light emitting area that is unobstructed by the window frame and a non-light emitting area that corresponds to and is obstructed by the window frame; and
a first electrode element disposed on a first surface of the surface light source body to cover a first portion of the non-light emitting area so that a second portion of the non-light emitting area is not covered by the first electrode element.

32. The display device as claimed in claim 31, further comprising:
a second electrode element disposed on a second surface of the surface light source body to cover the first portion and the second portion of the non-light emitting area.

33. The display device as claimed in claim 32, wherein the first electrode element does not have a rectangular shape, and the second electrode element has a rectangular shape.

34. A method of forming a surface light source unit to be installed in a window frame of a display device from a surface light source body having a discharge area including a light emitting area that is unobstructed by the window frame and a non-light emitting area that is obstructed by the window frame, the method comprising:
defining a first electrode element area on a first surface of the surface light source body to overlap with a first portion of the non-light emitting area so that a second portion of the non-light emitting area is not overlapped with by the first electrode element area; and
forming a metal layer to correspond to the first electrode element area to form a first electrode element.

35. The method as claimed in claim 34, further comprising:
forming a second electrode element disposed on a second surface of the surface light source body to cover the first portion and the second portion of the non-light emitting area.

36. The method as claimed in claim 35, wherein the first electrode element does not have a rectangular shape, and the second electrode element has a rectangular shape.
